# EUROPÄISCHE PATENTSCHRIFT

(11) **EP 2 852 303 B1**
(45) Veröffentlichungstag und Bekanntmachung des Hinweises auf die Patenterteilung: **30.11.2016**
(21) Anmeldenummer: 13723099.1
(22) Anmeldetag: 14.05.2013
(51) Int. Cl.: A47B 88/00

(54) **SCHUBKASTEN**
DRAWER
TIROIR

(30) Priorität: 23.05.2012 DE 102012104457
(43) Veröffentlichungstag der Anmeldung: 01.04.2015
(73) Patentinhaber: Paul Hettich GmbH & Co. KG, 32278 Kirchlengern (DE)
(72) Erfinder: ROTHE-WESEMANN, Anke, 49565 Bramsche (DE); STUFFEL, Andreas, 31675 Bückeburg (DE); ROSENTRETER, Nils, 49324 Melle (DE); HERZOG, Roman, 49080 Osnabrück (DE)
(74) Vertreter: Kleine, Hubertus
(86) Internationale Anmeldenummer: PCT/EP2013/059893
(87) Internationale Veröffentlichungsnummer: WO 2013/174674

(56) Entgegenhaltungen:
- DE-A1-102010 036 461
- DE-A1-102010 036 706
- DE-U1- 8 909 926
- DE-U1-202007 001 781
- GB-A- 1 536 536

## Beschreibung

Die vorliegende Erfindung betrifft einen Schubkasten gemäß dem Oberbegriff des Anspruchs 1.

Rechtwinklig zueinander angeordnete Fixierungsanordnungen von Blechteilen sind in zahlreichen Ausgestaltungen aus dem Stand der Technik bekannt. So ist beispielsweise aus der DE 10 2010 036 461 A1 ein Schubkasten mit zwei Seitenzargen und einer Rückwand bekannt, bei dem die Montage der Rückwand an den Seitenzargen durch ein Einschieben der Rückwand zwischen die Seitenzargen in Längserstreckung der Seitenzargen in Richtung der Schubkastenfront erfolgt, wobei die Verbindung nahe an der Oberkante der Seitenzarge über einen Federmechanismus erfolgt, bei dem an den Seitenzargen jeweils federbelastete und parallel zur Rückwand verlaufende Rastzapfen sowie diese Rastzapfen aufnehmende Rastkerben in Randstegen der Rückwand aufweisen, welche nach Einrasten der Rastzapfen in die Rastkerben die Rückwand sicher in der Oberfläche der Seitenzargen nahen Bereich arretiert. Im unteren Bereich der Seitenzargen wird die Rückwand im montierten Zustand durch eine aus dem horizontalen Tragsteg der Seitenzarge ausgestellten Lasche hintergriffen.

Nachteilig ist, dass insbesondere beim automatischen Fügen der Rückwand zwischen die Seitenzargen des Schubkastens diese Lasche im unteren Bereich verbogen werden kann und dass die Verrastung im unteren Bereich der Rückwand beim Auftreten eines seitlichen Verkippens an den Seitenzargen nach Art einer Parallelogrammverschiebung wieder aufgehoben werden kann und damit die Rückwand im schubkastenbodennahen Bereich nicht fixiert ist, was im Schubkasteninneren zum Auftreten eines Spalts zwischen dem unteren Bereich der Seitenzargen und der Rückwand bzw. zwischen dem Schubkastenboden und der Rückwand führen kann.

Aufgabe der vorliegenden Erfindung ist es daher, einen Schubkasten, so weiterzuentwickeln, dass eine Entrastung der Teile wirksam verhindert wird.

Diese Aufgabe wird durch einen Schubkasten mit den Merkmalen des Anspruchs 1 gelöst.

Der erfindungsgemäße Schubkasten, bei dem die Rückwand an den Seitenzargen oder den Adaptern durch einander gegenüberliegende Rastmittel an jedem der Seitenzargen oder Adaptern in einer Richtung parallel zu den Seitenzargen oder Adaptern gegen einen ortsfesten Anschlag festgelegt ist, weist Rastmittel mit aus den Seitenzargen oder Adaptern biegesteif zur Rückwand hin ausgestellten Erhebungen mit dem Anschlag zugewandten Rastkanten auf. Die Seitenzarge bzw. der Adapter sind dabei insoweit elastisch verformbar, dass die Rückwand entgegen der Federwirkung der Seitenzarge bzw. der Adapter über die Erhebungen hinweg zur Fixierung in die Verrastungsposition überführbar ist.

Dadurch wird erreicht, dass beim Fügen die Rastmittel nicht in die Ebene der Seitenzarge bzw. der Adapter, aus der die Rastmittel ausgestellt sind, zurückgedrückt werden können. Um den erforderlichen federnden Rücksprung über den Toleranzbereich bei den hier eingesetzten Blechen, welche nicht denen eines Federstahls gleichkommen, zu erreichen, wird die elastische Durchbiegungsfähigkeit der Seitenzarge bzw. der Adapter selbst zur Rückfederung beim Fügen des flächigen Bauteils, im Falle der Montage eines Schubkastens der Rückwand, einbezogen. Da die Zurückbiegung oder Zurückstellung der Rastmittel in die Ebene des Blechs verhindert ist, wird nunmehr entsprechend die Seitenzarge bzw. der Adapter elastisch verformt.

Gemäß einer vorteilhaften Ausführungsvariante sind die Erhebungen als in einer Ebene parallel zur jeweiligen Seitenzarge bzw. des Adapters über die Seitenzarge bzw. den Adapter gebogene Finger von ausgestellten Laschen ausgebildet, so dass die Finger beim Passieren der Rückwand in die Verrastungsposition in Richtung eines nicht aus gestellten Bereichs der Seitenzarge bzw. des Adapters gedrückt werden. Diese als Finger ausgebildeten Erhebungen sind dabei vorzugsweise geschlitzt und V-förmig aufgespreizt ausgebildet, denkbar sind jedoch auch andere Ausgestaltungen. Wichtig ist, dass durch das Verbiegen der Finger diese auf einem nicht ausgestellten Teil der

Seitenzarge bzw. des Adapters überlappen und dadurch nicht in die Ebene der Seitenzarge bzw. des Adapters zurückgedrückt werden können.

Gemäß einer alternativen Ausführungsvariante weisen die Erhebungen mindestens einen aus der Ebene der jeweiligen Seitenzarge bzw. des Adapters herausgedrückten Buckelnocken z.B. in Form einer Bombierung bzw. Sicke auf, durch dessen Formgestaltung eine erhebliche Biegesteifigkeit dieses ausgestellten Bereichs der Seitenzarge bzw. des Adapters erreicht wird und über den bei Überfahren durch eine Rückwand nicht in die Ebene der Seitenzarge bzw. des Adapters zurückgedrückt wird, sondern die bei diesem Vorgang auftretende Spreizkraft an die Seitenzarge bzw. den Adapter weitergibt, so dass auch hier die Elastizität der Seitenzarge bzw. des Adapters beim Verrasten der Rückwand ausgenutzt wird.

Unter biegesteif wird im Sinne dieser Schrift verstanden, dass ein Element im Umformprozess, beispielweise durch Stanzen geschaffen wurde, dass erst bei einer sehr hohen Krafteinwirkung plastisch oder elastisch verformbar ist.

Vorteilhafte Ausführungsvarianten der Erfindung sind Gegenstand der Unteransprüche.

Irreversibel im Sinne dieser Schrift meint, dass ein durch Umformen geschaffenes Element nicht in seine Ursprungslage zurück gedrückt werden kann, es kann nicht zu Grunde gedrückt werden.

Die zur Fixierung eines Bauteiles, insbesondere eines flächigen Bauteiles erfindungsgemäß als Rastelemente ausgeführten Erhebungen sind somit biegesteif bzw. irreversibel ausgeführt. Beim Passieren des zu fügenden Bauteiles können die Erhebungen nicht in ihre Ausgangslage zurückgedrückt werden.

Vorteilhaft an beiden Lösungen ist, dass mit der erfindungsgemäßen Fixierungsanordnung eine breitentoleranzunempfindliche Verrastung ohne Verwendung zusätzlicher Bauteile ermöglich ist.

Neben den Rastmittel als integrativer Bestandteil der Blechadapter, ist es selbstverständlich auch denkbar, dass die Blechadapter selbst Teil der Seitenzargen sind oder die Rastmittel unmittelbar in den Seitenzargen eingearbeitet sind.

Die Rückwand kann aus verschiedenen Werkstoffen hergestellt sein, beispielsweise aus Metall, Kunststoff oder Verbundwerkstoffen.

Nachfolgend werden Ausführungsbeispiele anhand der beiliegenden Zeichnungen näher erläutert.

Es zeigen:
- Figur 1: eine perspektivische Ansicht einer ersten Ausführungsvariante eines erfindungsgemäßen Schubkastens,
- Figur 2a: eine perspektivische Teilansicht eines in Figur 1 gezeigten rückwärtigen Endbereichs des Schubkastens,
- Figur 2b: eine perspektivische Ansicht des in Figur 2a gezeigten Endbereichs des Schubkastens in nochmals vergrößerter Darstellung,
- Figur 3: den in Figur 2b gezeigten Endbereich des Schubkastens ohne Schubkastenboden,
- Figur 4: eine weitere perspektivische Darstellung des in Figur 3 gezeigten Endbereichs des Schubkastenbodens aus einer anderen Perspektive,
- Figur 5a: der in Figur 2a gezeigte Teilausschnitt des Schubkastens in einer Seitenschnittansicht und
- Figur 5b: eine weitere Schnittansicht durch die in Figur 5a gekennzeichnete Schnittebene,
- Figur 6a: nochmals die in Figur 5a gezeigte Schnittansicht mit Darstellung einer weiteren Schnittebene,
- Figur 6b: eine Schnittansicht durch die in Figur 6a gezeigte Schnittebene des Schubkastens
- Figuren 7-9: den Figuren 1-3 entsprechende Darstellungen in einer weiteren Ausführungsvariante eines erfindungsgemäßen Schubkastens und
- Figuren 10a - 11b: den Figuren 5a bis 6b entsprechenden Teilansichten der alternativen Ausführungsvariante des erfindungsgemäßen Schubkastens.

In der nachfolgenden Figurenbeschreibung beziehen sich Begriff wie oben, unten, links, rechts, vorne, hinten usw. ausschließlich auf die in den jeweiligen Figuren gewählte beispielhafte Darstellung und Position der Fixierungsanordnung, des Schubkastens, der Rastmittel und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

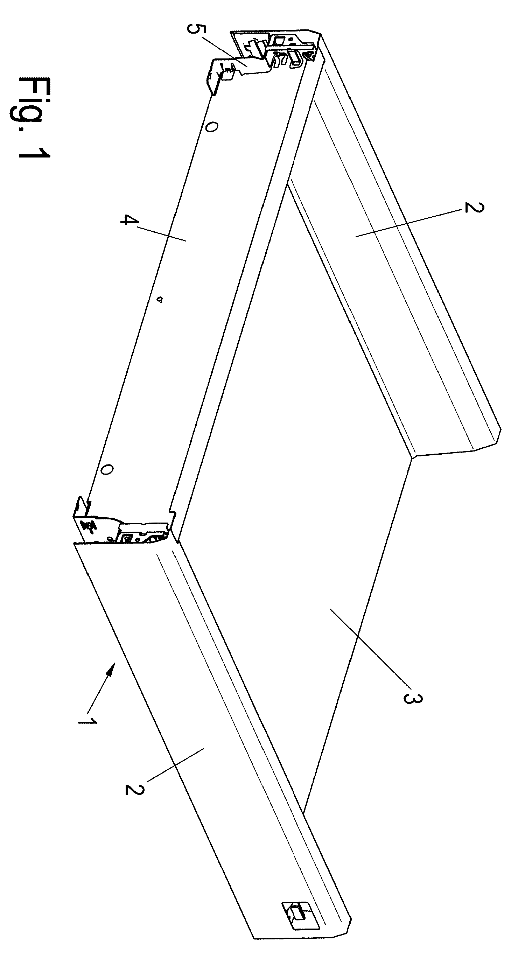

In Figur 1 ist mit dem Bezugszeichen 1 insgesamt ein Schubkasten bezeichnet, der in an sich bekannter Weise einen Schubkastenboden 3, zwei Seitenzargen 2, eine Rückwand 4 sowie eine hier nicht dargestellte Frontblende aufweist.

Die Rückwand 4 ist dabei mit den Seitenzargen 2 des Schubkastens 1 durch Rastmittel verbunden, auf deren Gestaltung und Wirkungsweise im Folgenden noch näher eingegangen wird. Wesentlich bei dieser Verbindung zwischen Rückwand 4 und den Seitenzargen 2 ist, dass die Verbindung ausschließlich durch eine Verschiebung der Rückwand 4 in Richtung der Längsachse der Seitenzargen 2 des Schubkastens 1 ermöglicht ist.

Wie in Figur 1 des Weiteren gezeigt ist, sind an den Seitenzargen 2 bevorzugt Blechadapter 5 angeordnet, die bevorzugt im Zwischenraum zwischen den hier mit doppelwandigen Seitenwänden ausgestalteten Seitenzargen 2 befestigt oder angeformt sind.

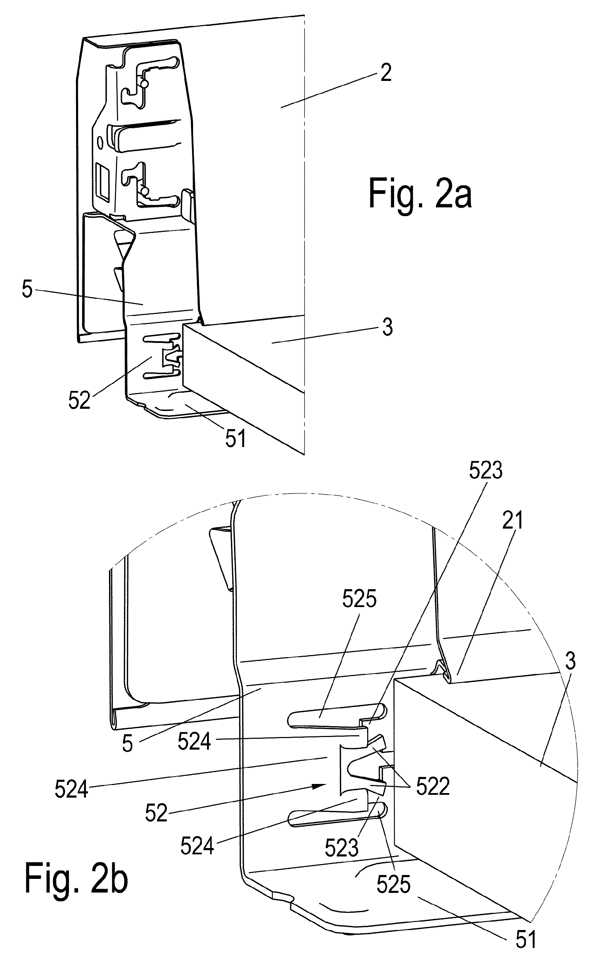

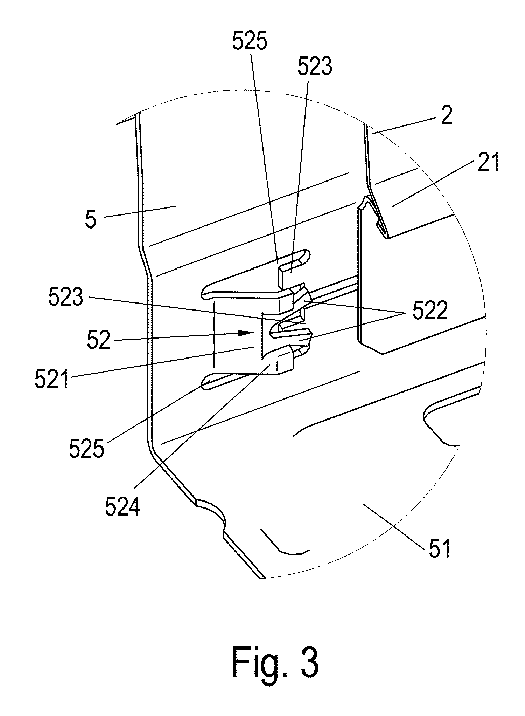

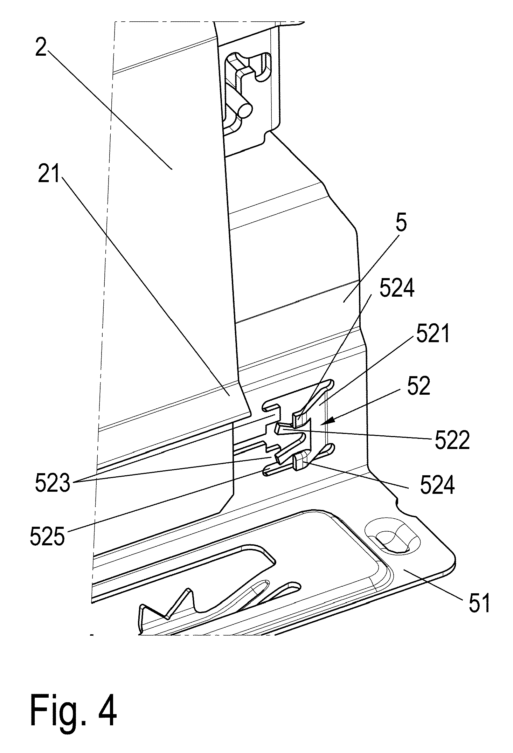

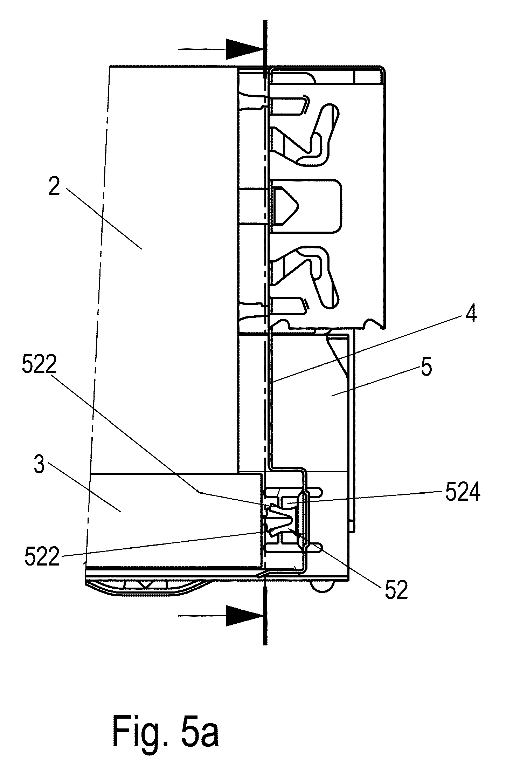

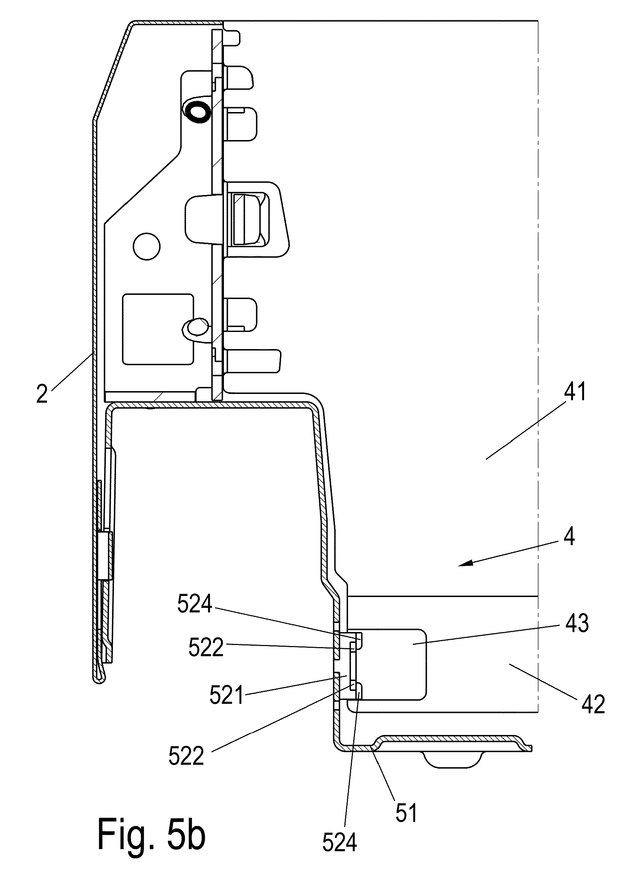

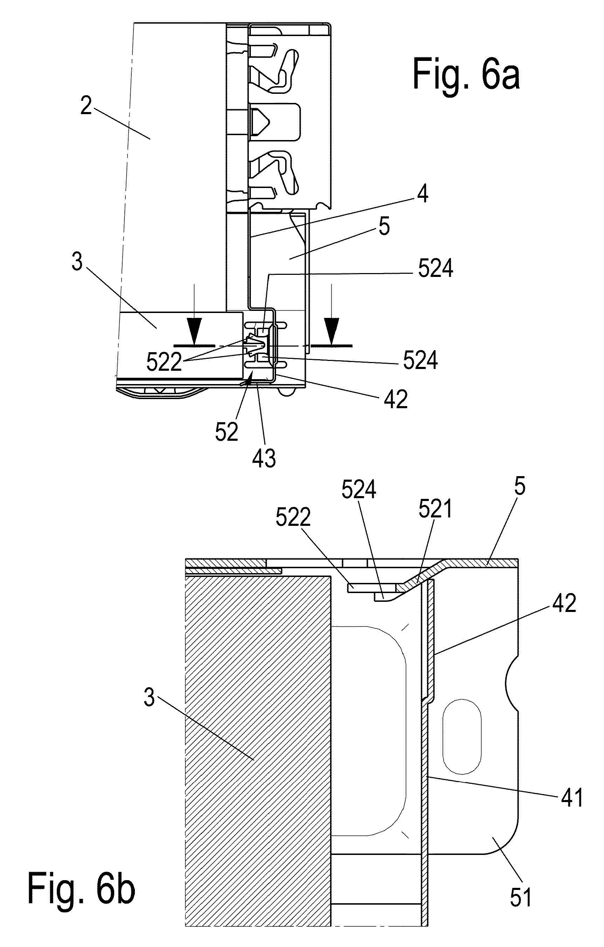

Wenngleich in den Figuren 2-6b) und 8-11 b) die Rastmittel stets als Teil der Blechadapter 5 dargestellt sind, ist es selbstverständlich auch denkbar, dass die Blechadapter 5 selbst Teil der Seitenzargen 2 sind oder die Rastmittel 52, 52' unmittelbar in den Seitenzargen 2 eingearbeitet sind.

Weiterhin ist die hier dargestellte Verbindung zwischen der Rückwand 4 des Schubkastens 1 und dessen Seitenzargen 2 als beispielhafte Fixierungsanordnung zweier parallel zueinander angeordneter Blechteile 2, welche den Seitenzargen 2 des Schubkastens 1 entsprechen, und einem die Blechteile 2 verbindenden, rechtwinklig zwischen den Blechteilen 2 angeordneten flächigen Bauteil 4, welches der Rückwand 4 des Schubkastens 1 entspricht, zu betrachten.

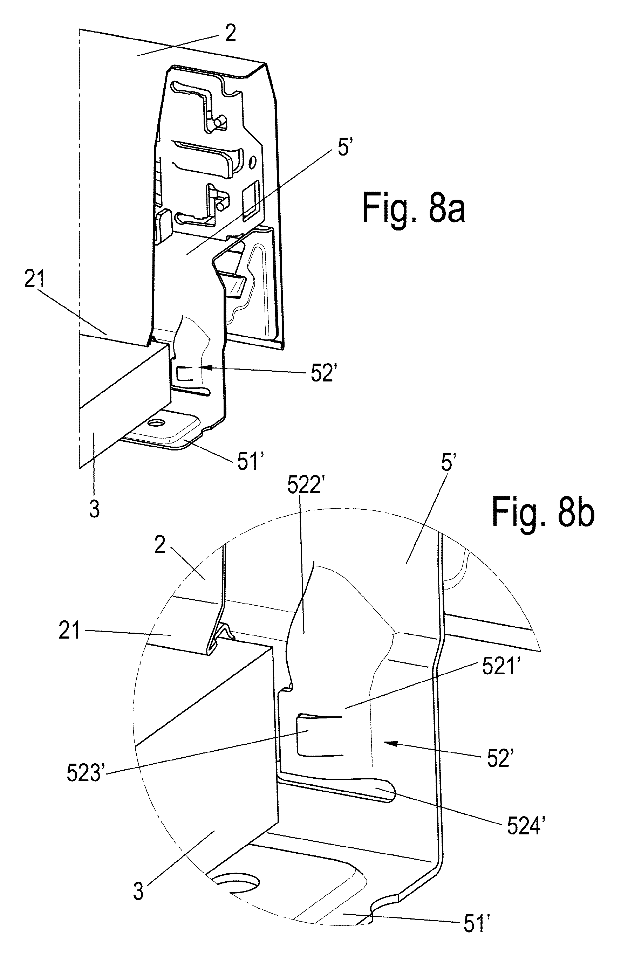

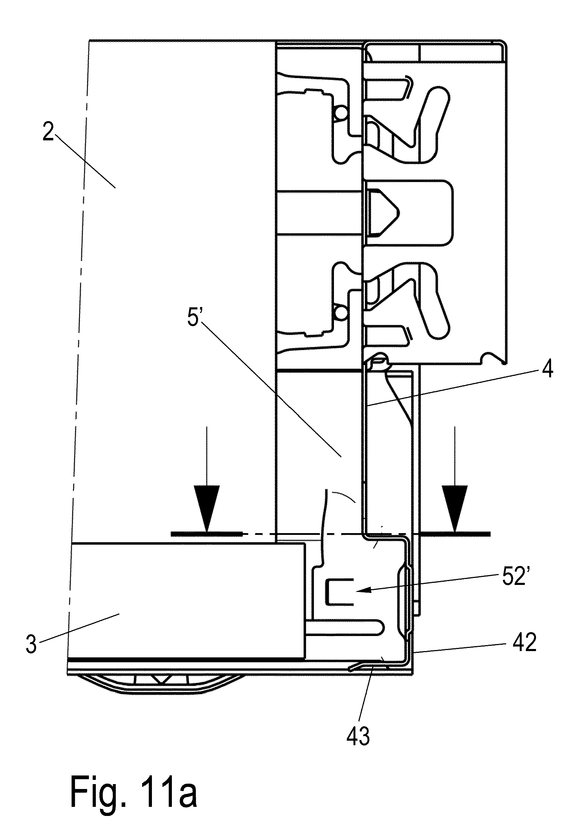

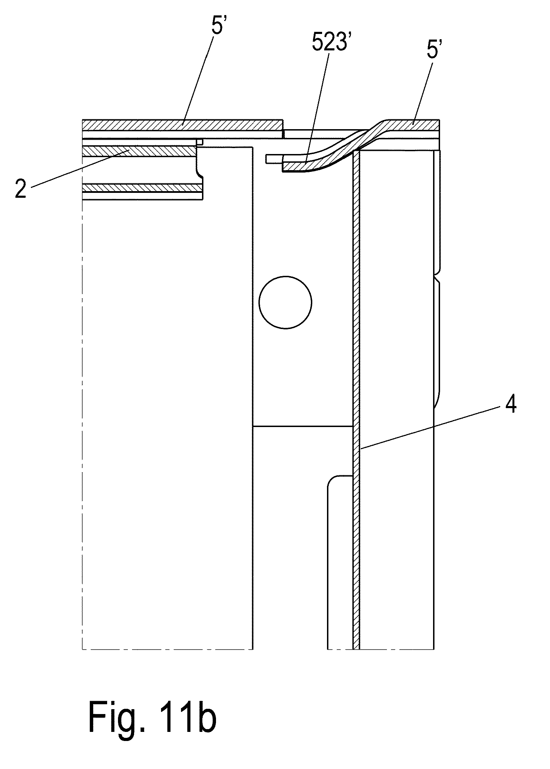

Die weitere Beschreibung dieser Fixierungsanordnung wird nur anhand der Verbindung der Rückwand 4 mit den Seitenzargen 2 des Schubkastens 1, wie es in den Figuren 1-11b) gezeigt ist, beschrieben.

Die Figuren 1-6b) zeigen dabei eine bevorzugte Ausführungsvariante. Wie in Figur 1 gezeigt ist, ist die Rückwand 4 an den Seitenzargen 2 durch einander gegenüberliegende Rastmittel 52 an ihren den Seitenzargen 2 in einer Richtung parallel zu den Seitenzargen 2 gegen einen ortsfesten Anschlag 3 in einem bodennahen Bereich 42 der Rückwand festgelegt. Im oberen Bereich 41 erfolgt die Festlegung der Rückwand beispielsweise durch eine über einen Federmechanismus, wie er in der DE 10 2010 036 461 A1 beschrieben ist.

Dieser ortsfeste Anschlag 3 wird im Ausführungsbeispiel des Schubkastens 1 durch den Schubkastenboden 3 gebildet. Die Rastmittel 52 sind dabei, wie in den Figuren 2b), 3 und 4 gut zu erkennen ist, aus aus den Seitenzargen 2, insbesondere in dem hier gezeigten Ausführungsbeispiel aus Blechadaptern 5 als Teil der Seitenzargen 2 biegesteif zur Rückwand hin ausgestellte Erhebungen 522 aufweisen, mit dem Schubkastenboden 3 zugewandten Rastkanten. Die Blechadapter 5 sind dabei soweit elastisch verformbar, dass die Rückwand 4 entgegen der Federwirkung der Blechadapter 5 bzw. der Seitenzargen 2 über die Erhebungen 522 der Rastmittel 52 hinweg in die Verrastungsposition überführbar ist. Der Schubkastenboden 3 wird seitlich parallel zur Längserstreckung der Seitenzargen zwischen einer an der Innenwand der jeweiligen Seitenzarge 2 angeformten Klemmnase 21 und einem in die Waagerechte umgebogenen Teilstücks 51 des Blechadapters 5 geführt.

Die Erhebungen 522 sind dabei in der in den Figuren 1-7 gezeigten Ausführungsvariante als in einer Ebene parallel zum jeweiligen Blechadapter 5 über ein als Gegenlager dienendes Teilstück des Blechadapters 5 gebogene Finger von ausgestellten Laschen 521 ausgebildet, so dass die Finger bei Passieren der Rückwand 4 in ihre Verrastungsposition in Richtung eines nicht ausgestellten Bereichs 523 des Blechadapters 5 gedrückt werden. Dadurch wird eine Biegesteifigkeit der Rastmittel 52 derart bewirkt, dass beim Einschieben der Rückwand 4 in ihre Verrastungsposition die Rastmittel 52 nicht in die Ebene des Blechadapters 5 zurückgedrückt werden können und durch das Übereinanderlegen der umgebogenen Finger eine Stufe gebildet wird, die um eine Materialstärke des Blechadapters 5, sprich um eine Blechstärke, in den Zwischenraum zwischen den beiden Seitenzargen 2 verspringt.

Die als Finger ausgebildeten Erhebungen 522 sind dabei bevorzugt geschlitzt und V-förmig aufgespreizt ausgebildet, wie besonders gut in Figur 2b) zu erkennen ist.

Zur Ausbildung des in den Figuren 1 - 6b) gezeigten Ausführungsbeispiels des Rastmittels 52 sind in Fügerichtung der Rückwand 4 parallele Ausnehmungen 525 aus dem Blech des Blechadapters 5 auf Höhe des Schubkastenbodens 3 ausgestanzt. Senkrecht zur Längserstreckung dieser Ausnehmungen 525 wird aus dem Blech die Lasche 521 freigestanzt in der Art, dass die äußeren Bereiche 524 der Lasche 521 kürzer sind als ein Mittenteil, aus dem die Finger gebildet sind, die in einem anschließenden Schritt zunächst mittig in Längserstreckung der Seitenzargen 2 geschlitzt und anschließend V-förmig aufgespreizt werden. Die in dieser Art aufgespreizten Erhebungen 522 sind dann so positioniert, dass sie von der Seitenkante der Rückwand 4 aus betrachtet über einem nicht ausgestellten Bereich 523 des Blechadapters 5 liegen und beim Verschieben der Rückwand 4 über die Rastmittel 52 eine Rückbiegung der Erhebungen 522 in den Materialquerschnitt des vertikalen Stegs des Blechadapters 5 verhindert wird.

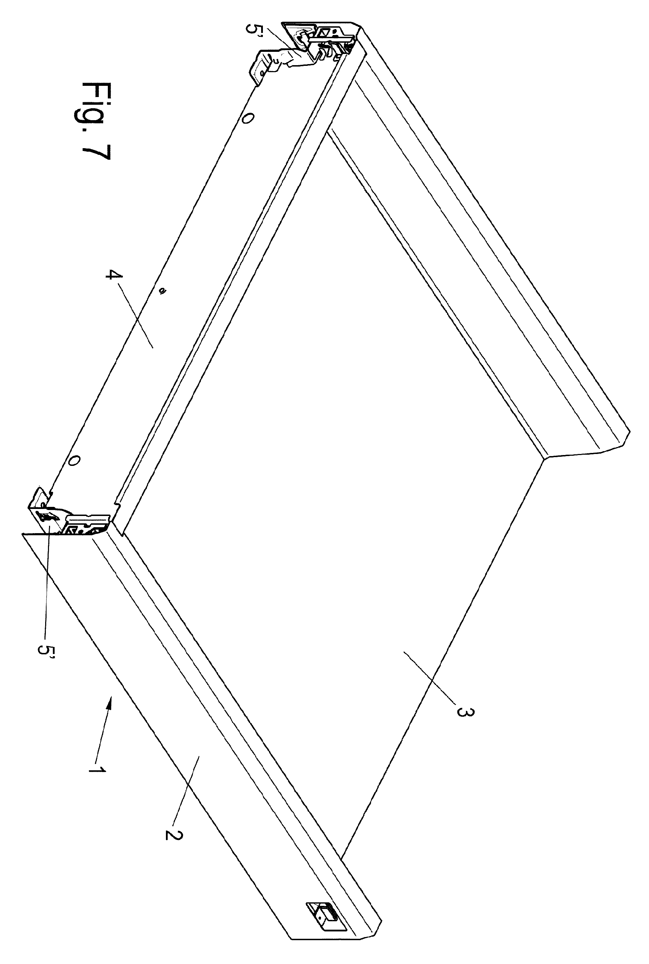

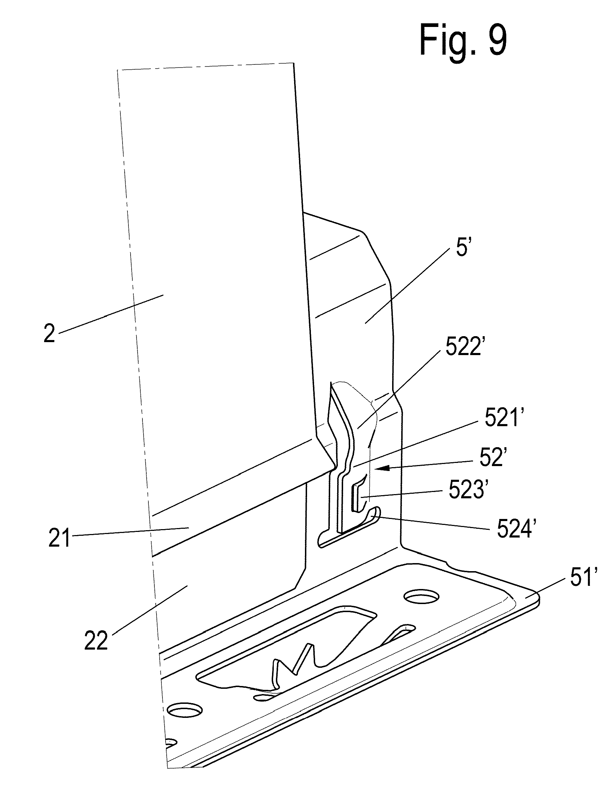

Bei der in den Figuren 7-11b) gezeigten alternativen Ausführungsvariante einer erfindungsgemäßen Fixierungsanordnung bzw. eines erfindungsgemäßen Schubkastens 1, weisen die Erhebungen 521' der Rastmittel 52' mindestens einen aus der Ebene des jeweiligen Blechadapters 5 herausgedrückten Buckelnocken 522' auf. Unterhalb dieses Buckelnockens 522' weist das Rastmittel 52' eine parallel zur Ebene des Anschlags 3, hier der rückwärtigen vertikalen Kante des Schubkastenbodens 3 ein Plateau mit einer aus diesem ausgestellten Lasche 523' auf. Dabei stehen die Buckelnocken 522' bevorzugt mindestens so weit aus dem jeweiligen Blechadapter 5 heraus, wie das freie Ende dieser Laschen 523'. Das die Lasche 523' aufweisende Plateau ist dabei, wie beispielsweise in Figur 9 gut zu erkennen ist, durch eine Ausnehmung 524' freigestellt.

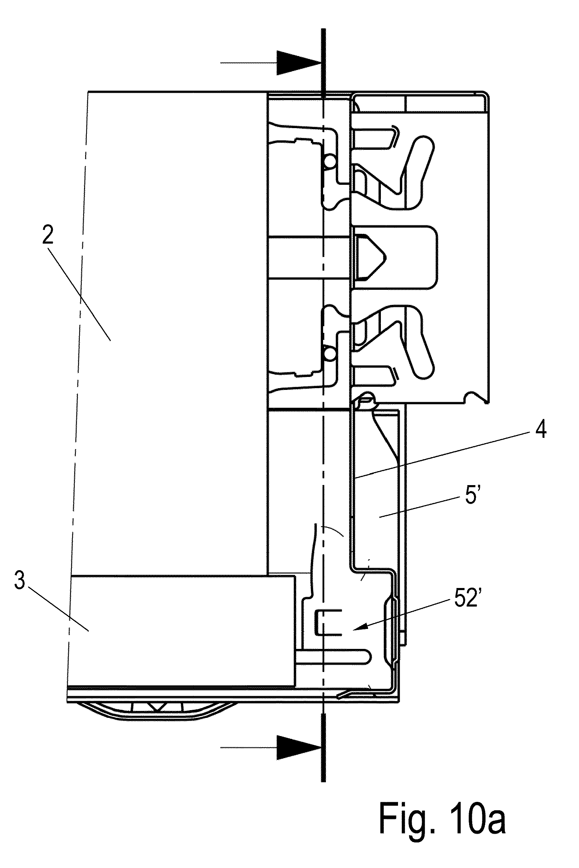

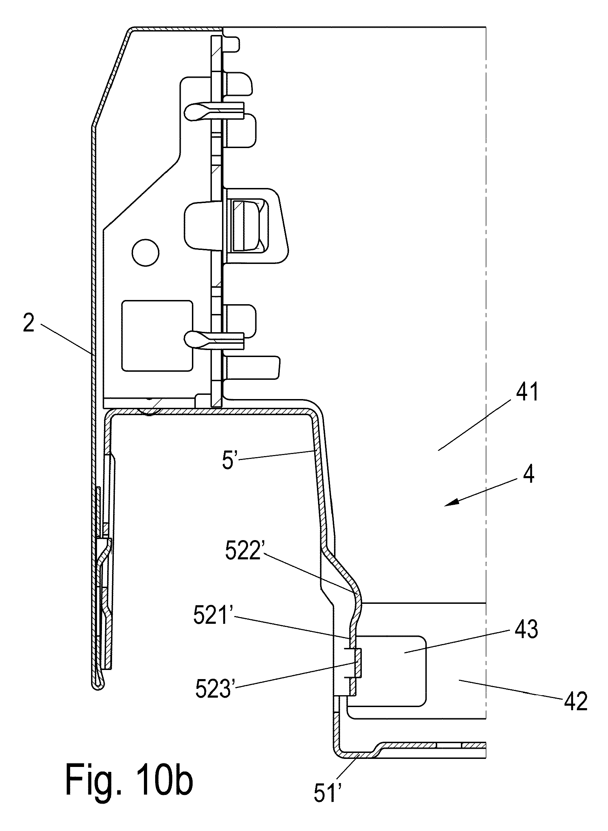

Jeder der Buckelnocken 522' ist dabei, wie in den Figuren 10b) und 11a) gut zu erkennen ist, so positioniert, dass er einen versteiften Bereich der Rückwand 4 an einer oberen Kante 44 eines Rücksprungs 42 zur Aufnahme des Schubkastenbodens 3 berührt.

Zur zusätzlichen Versteifung der Rückwand 4 im Bereich der Berührungsstelle mit den Rastmitteln 52 ist das Blech der Rückwand 4 mit einem zusätzlichen Rücksprung 43 in der vertikalen Ebene des Rücksprungs 42 ausgebildet. Mit diesem Rücksprung 43 können auch Toleranzen, die Materialdicke der Rückwand 4 betreffend ausgeglichen werden, um auf der Schubkasteninnenseite das Auftreten eines Spalts im Anschlussbereich des Schubkastenbodens 3 und der Rückwand 4 zusätzlich zu verhindern.

Bei der erfindungsgemäßen Ausführungsvariante der Fixierungsanordnung bietet im Falle des Zusammenbaus eines Schubkastens den Vorteil einer bequemen, leichten und exakten Montage beim Verbinden der Rückwand 4 mit den Seitenzargen 2 des Schubkastens 1, wobei die erfindungsgemäße Fixierungsanordnung sich insbesondere für den maschinellen Zusammenbau eignet.

### Bezugszeichenliste

- 1: Schubkasten
- 2: Seitenzarge / Blechteil
- 3: Schubkastenboden / Anschlag
- 4: Rückwand / flächiges Bauteil
- 5: Blechadapter
- 5': Blechadapter

- 21: Klemmnase
- 41: oberer Bereich
- 42: Rücksprung
- 43: Rücksprung
- 44: Kante
- 51: waagerechtes Teilstück
- 52: Rastmittel
- 52': Rastmittel
- 521: Lasche
- 521': Erhebung
- 522: Erhebung
- 522': Buckelnocke
- 523: nicht ausgestellter Bereich
- 524: äußerer Bereich
- 524': Ausnehmung
- 525: Ausnehmung

## Patentansprüche

1. Schubkasten (1) mit zwei , aus Blech ausgebildeten, parallel zueinander angeordneten Seitenzargen (2) oder an den Seitenzargen (2) angeordneten Adaptern (5, 5') und einer rechtwinklig zwischen den Seitenzargen (2) oder den Adaptern (5, 5') angeordneten Rückwand (4), wobei die Rückwand (4) an den Seitenzargen (2) oder den Adaptern (5, 5') durch einander gegenüber liegende Rastmittel (52, 52') an jeder Seitenzargen (2) oder jedem der Adapter (5, 5') in einer Richtung parallel zu den Seitenzargen (2) oder den Adaptern (5, 5') gegen einen ortsfesten Anschlag (3) festgelegt ist, **dadurch gekennzeichnet, dass** die Rastmittel (52, 52') aus den Seitenzargen (2) oder den Adaptern (5, 5') biegesteif zur Rückwand (4) hin ausgestellte Erhebungen (522, 521') aufweisen, mit dem Anschlag (3) zugewandten Rastkanten, wobei die Seitenzargen (2) oder die Adapter (5, 5') soweit elastisch verformbar sind, dass die Rückwand (4) über die Erhebungen (522, 521') hinweg in die Fixierungsposition überführbar ist, wobei die Erhebungen (522) als in einer Ebene parallel zur jeweiligen Seitenzarge (2) oder zum jeweiligen Adapter (5, 5') überlappend zur Seitenzarge (2) oder zum Adapter (5, 5') gebogene Finger von ausgestellten Laschen (521) ausgebildet sind, so dass die Finger beim Passieren der Rückwand (4) in die Verrastungsposition in Richtung eines nicht ausgestellten Bereichs (523) der Seitenzarge (2) oder des Adapters gedrückt werden und ein zu Grunde drücken der Laschen (521) verhindert ist , oder wobei die Erhebungen (521') mindestens einen aus der Ebene der jeweiligen Seitenzarge (2) oder des jeweiligen Adapters (5, 5') herausgedrückten Buckelnocken (522') aufweisen.

2. Schubkasten nach Anspruch 1, **dadurch gekennzeichnet, dass** die als Finger ausgebildeten Erhebungen (522) geschlitzt und v-förmig aufgespreizt ausgebildet sind.

3. Schubkasten nach Anspruch 1, **dadurch gekennzeichnet, dass** die Erhebungen (521') parallel zur Ebene des Anschlags (3) ein Plateau mit einer aus diesem ausgestellten Lasche (523') aufweisen.

4. Schubkasten nach Anspruch 3, **dadurch gekennzeichnet, dass** die Buckelnocken (522') mindestens so weit aus dem jeweiligen Blechteil (2, 5, 5') herausgedrückt sind wie das freie Ende der Laschen (523').

5. Schubkasten nach Anspruch 1, **dadurch gekennzeichnet, dass** der Anschlag der Schubkastenboden (3) ist.

6. Schubkasten nach Anspruch 1 oder 2, **dadurch gekennzeichnet, dass** die Seitenzargen jeweils doppelwandige Seitenwände und zwischen den Seitenwänden befestigte Blechadapter (5) mit den Rastmitteln (52, 52') aufweisen.

## Claims

1. Drawer (1) with two side frames (2) formed from sheet metal and arranged parallel to one another or with adapters (5, 5') arranged on the side frames (2) and with a rear wall (4) arranged at right angles between the side frames (2) or the adapters (5, 5'), wherein the rear wall (4) is fixed on the side frames (2) or the adapters (5, 5') by locking means (52, 52') lying opposite to one another at each side frame (2) or each of the adapters (5, 5') in a direction parallel to the side frames (2) or the adapters (5, 5') against a stationary stop (3), **characterized in that** the locking means (52, 52') exhibit elevations (522, 521') extending from the side frames (2) or the adapters (5, 5') towards the rear wall (4) in a flexurally resistant manner, said elevations having locking edges facing the stop (3), wherein the side frames (2) or the adapters (5, 5') are elastically deformable, such that the rear wall (4) can be moved beyond the elevations (522, 521') into the fixing position, wherein the elevations (522) are configured as fingers of extending lugs (521) bent in a plane parallel to the respective side frame (2) or to the respective adapter (5, 5') overlapping in respect of the side frame (2) or in respect of the adapter (5, 5'), so that when passing the rear wall (4) the fingers are pressed into the locking position in the direction of a non-extended region (523) of the side frame (2) or of the adapter and the lugs (521) are prevented from being pressed right down, or wherein the elevations (521') exhibit at least one bulge cam (522') pressed out from the plane of the respective side frame (2) or of the respective adapter (5, 5').

2. Drawer according to Claim 1, **characterized in that** the elevations (522) configured as fingers are configured with a slit and splayed out in a V-shape.

3. Drawer according to Claim 1, **characterized in that** the elevations (521') exhibit a plateau with a lug (523') extending therefrom parallel to the plane of the stop (3).

4. Drawer according to Claim 3, **characterized in that** the bulge cams (522') are pressed out from the respective sheet metal part (2, 5, 5') at least as far as the free end of the lugs (523').

5. Drawer according to Claim 1, **characterized in that** the stop is the drawer base (3).

6. Drawer according to Claim 1 or 2, **characterized in that** the side frames each exhibit double-walled side walls and sheet metal adapters (5) fastened between the side frames with locking means (52, 52').

## Revendications

1. Tiroir (1) avec deux cadres latéraux (2) en tôle disposés parallèlement l'un à l'autre ou des adaptateurs (5, 5') disposés sur les cadres latéraux (2) et avec une paroi arrière (4) disposée à angle droit entre les cadres latéraux (2) ou les adaptateurs (5, 5'), dans lequel la paroi arrière (4), est fixée sur les cadres latéraux (2) ou les adaptateurs (5, 5') par des moyens d'enclenchement (52, 52') se faisant face sur chacun des cadres latéraux (2) ou chacun des adaptateurs (5, 5') dans une direction parallèle aux cadres latéraux (2) ou aux adaptateurs (5, 5') contre une butée fixe (3), **caractérisé en ce que** les moyens d'enclenchement (52, 52') présentent des reliefs (522, 521') rigides en flexion qui dépassent des cadres latéraux (2) ou des adaptateurs (5, 5') en direction de la paroi arrière (4), avec des bords d'enclenchement tournés vers la butée (3), les cadres latéraux (2) ou les adaptateurs (5, 5') étant capables de déformation élastique jusqu'à ce que la paroi arrière (4) puisse être amenée dans la position de fixation au-delà des reliefs (522, 521'), les reliefs (522) étant conformés comme des pattes de languettes en saillie (521) qui se chevauchent dans un plan parallèle à chaque cadre latéral (2) ou à chaque adaptateur (5, 5') et sont courbées vers le cadre latéral (2) ou vers l'adaptateur (5, 5') de telle façon qu'elles soient poussées, lors du passage de la paroi arrière (4) dans la position d'emboîtement, vers une zone sans relief (523) du cadre latéral (2) ou de l'adaptateur et que les languettes (521) ne puissent pas être enfoncées jusqu'au fond, les reliefs (521') présentant au moins des bossage formant des cames (522') repoussés hors du plan du cadre latéral (2) ou de l'adaptateur (5, 5').

2. Tiroir selon la revendication 1, **caractérisé en ce que** les reliefs (522) conformés comme des pattes sont fendus et écartés en forme de V.

3. Tiroir selon la revendication 1, **caractérisé en ce que** les reliefs (521') présentent parallèlement au plan de la butée (3) un plateau duquel dépasse une languette (523').

4. Tiroir selon la revendication 3, **caractérisé en ce que** les bossage formant des cames (522') sont repoussés à partir de la pièce de tôle correspondante (2, 5, 5') au moins aussi loin que l'extrémité libre des languettes (523').

5. Tiroir selon la revendication 1, **caractérisé en ce que** la butée est le fond du tiroir (3).

6. Tiroir selon la revendication 1 ou 2, **caractérisé en ce que** les cadres latéraux présentent chacun des parois latérales doubles et présentent des adaptateurs en tôle (5) fixés entre les parois latérales avec les moyens d'enclenchement (52, 52').
